# EUROPEAN PATENT APPLICATION

(11) **EP 0 869 640 A1**
(43) Date of publication of application: **07.10.1998**
(21) Application number: 98302092.6
(22) Date of filing: 19.03.1998
(51) Int. Cl.: H04L 12/28

(54) **Intermittently connectable electronic device with unique identifier**

(30) Priority: 01.04.1997 US 834683
(71) Applicant: Hewlett-Packard Company, Palo Alto, California 94304 (US)
(72) Inventor: Miranda, Rafael F., Corvallis, OR 97330 (US); May, Gregory J., Corvallis, OR 97330 (US)
(74) Representative: Colgan, Stephen James

(57) **Abstract**

An intermittently connectable electronic device (10,410,510) that is capable of intermittent connection to a network administrator, a central hub or other electronic device (60,61,70,470,510B,510C). The intermittently connectable electronic device is provided with a unique identifier (41). Different schemes are provided for the compilation of status and health information (42) from the device. An absence agent (82) is also provided which responds to an administrator's (or other electronic device's) request for data and stores message data for subsequent transmission to a device, when that device is not connected, amongst other features. A related method is also disclosed.

## Description

### FIELD OF THE INVENTION

The present invention relates to the identification of electronic devices that are intermittently connected to an administrator or other electronic device. The present invention also relates to the transmission of information between the intermittently connected electronic device and the administrator or other electronic device.

### BACKGROUND OF THE INVENTION

Progress in semiconductor technology has resulted in the fabrication of smaller yet more powerful electronic components. These advances have lead to an appreciable increase in the number and variety of mobile electronic devices. Representative mobile electronic devices include portable computers, personal communication devices, custom designed field devices for salespersons and servicepersons, and the like. These devices are normally configured such that they intermittently connect to an administrator, hub, or other electronic device to upload or download information. Advances in electronics have also lead to the generation of many non-mobile machines that intermittently connect to an administrator or central hub to receive or transmit information.

With respect to portable computers, such as laptops, notebooks, palmtops and the like, these devices are often connected intermittently to a computer network. The two principal methods of connection are through (1) an Ethernet adapter card and (2) a modem and remote access server. When access is achieved via an Ethernet adapter card, the network administrator recognizes the computer by a unique media access control (MAC) address. When access is achieved via a modem, the network administrator assigns a roaming IP address to the mobile unit while it is connected.

Since Ethernet adapter cards are readily interchangeable (they are often configured as PCMCIA cards) and roaming IP address are only temporarily assigned, these mobile electronic devices do not have a permanent unique electronic identifier. As a result, the administrator does not know which mobile unit it is communicating with and thus there is no relevance in maintaining status or health information (useful in scheduling maintenance and monitoring performance, etc.) for these intermittently connected units. Furthermore, absence of a unique identifier prevents electronic asset management such as inventorying components, configurations, capacity, use, and the like, and may disadvantageously compromise security.

The failure to provide unique identifiers without appropriate authentication and a way of communicating information such as status and health data is similarly disadvantageous for personal communication devices, custom-designed salesperson and serviceperson devices, non-mobile units, and like electronic devices.

### SUMMARY OF INVENTION

Accordingly, it is an object of the present invention to provide an intermittently connectable electronic device that has a permanent unique electronic identifier.

It is another object of the present invention to provide an intermittently connectable electronic device that can provide status and health information to another electronic device.

It is another object of the present invention to collect information from an intermittently connectable electronic device and provide that information to a user upon request.

It is also an object of the present invention to store information for an intermittently connectable electronic device when it is not connected and propagate that information to the intermittently connectable electronic device when it connects.

These and related objects of the present invention are achieved by use of the intermittently connectable electronic device, administrating apparatus and method disclosed herein.

One embodiment of the present invention includes an intermittently connectable electronic apparatus comprising a housing; a processor mounted to said housing; connecting means coupled to said processor for connecting said intermittently connectable electronic apparatus to another electronic device; unique identifier means coupled to said processor for storing a unique identifier of said intermittently connectable electronic apparatus; and logic means for presenting said unique identifier to another electronic device coupled to said connecting means in such a manner that another electronic device coupled to said connecting means can read said unique identifier. Means are also preferably provided for detecting and storing status and health information for said intermittently connectable electronic apparatus and for presenting said status and health information to another electronic device coupled to said connecting means in such a manner that another electronic device connected at said connecting means can read the status and health information.

Another embodiment of the present invention includes an intermittently connectable electronic device administrating apparatus comprising a housing; a processor coupled to said housing; memory coupled to said processor; means for connecting to an intermittently connectable electronic device; detection logic for detecting the establishment of communication between an intermittently connectable electronic device and said administrating apparatus through said connecting means; and unique identifier reading logic for reading a unique identifier of an intermittently connectable electronic device that has established communication with said administrating apparatus through said connecting means. This embodiment further comprises means for reading status and health information from an intermittently connectable electronic device that has established communication with said administrating apparatus through said connecting means and database means including fields for a unique identifier and status and health information, amongst other information. A monitor may be provided, coupled to said processor, for displaying icon representative of intermittently connectable electronic devices. An absence agent may respond with information from the database when a subject intermittently connectable electronic device is not connected and may store messages for a non-connected intermittently connectable electronic device for subsequent transmission when that intermittently connectable electronic device connects to the administrating apparatus.

In yet another embodiment of the present invention a method is disclosed that comprises the steps of providing memory coupled to a processor; providing means coupled to said processor for connecting to an intermittently connectable electronic device; detecting the establishment of communication between an intermittently connectable electronic device and said connecting means; and reading a unique identifier of an intermittently connectable electronic device that has established communication through said connecting means. This method may also contain the steps of reading status and health information from an intermittently connectable electronic device that has established communication through said connecting means; storing a unique identifier and status and health information for an intermittently connectable electronic device in a database; displaying an icon of an intermittently connectable electronic device on a monitor that corresponds to an actual intermittently connectable electronic device; responding with information from said database when a subject intermittently connectable electronic device is not connected; and storing messages for a non-connected intermittently connectable electronic device for subsequent transmission when that intermittently connectable electronic device connects; amongst other steps.

The attainment of the foregoing and related advantages, features and configurations of the present invention should be more readily apparent to those skilled in the art, after review of the following more detailed description of the invention taken together with the drawings.

### BRIEF DESCRIPTION OF THE DRAWINGS

Fig. 1 is a diagram including an intermittently connectable electronic device and a remote management system in accordance with the present invention.

Fig. 2 is a flow diagram for the transmission of data from an intermittently connectable electronic device to another electronic device in accordance with the present invention.

Figs. 3a-3b are flow diagrams for the operation of an absence agent in responding for an absent intermittently connectable electronic device in accordance with the present invention.

Fig. 4 is a diagram illustrating a cellular phone or radio frequency network/central hub system in accordance with the present invention.

Fig. 5 is a diagram of a peer to peer communication system in accordance with the present invention.

### DETAILED DESCRIPTION

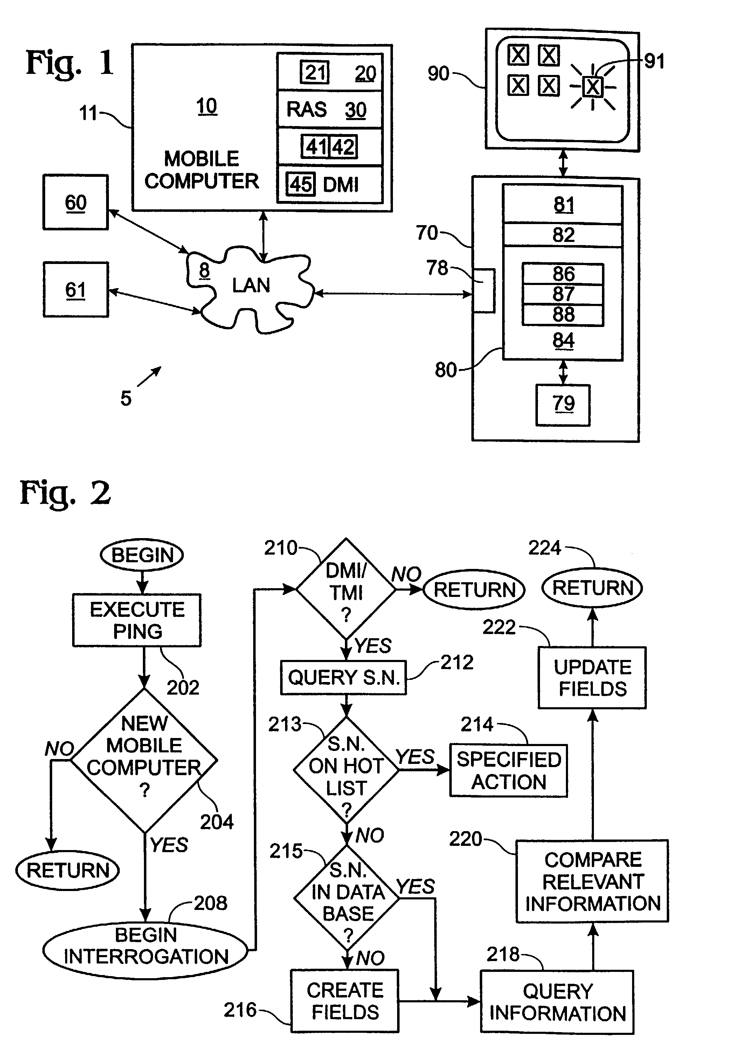

The present invention is applicable to any device that intermittently connects and communicates with another electronic device. The connection may take the form of a network, central hub, cellular phone relay equipment or peer to peer, amongst others. In the example of Fig. 1 that follows an electronic device 10 is provided that intermittently connects to a network 5. This device may be a notebook computer or any other type of electronic device, mobile or non-mobile, that may intermittently connect to the network. The network may be implemented as physical connections, RF-LAN, IR, or other.

Referring to Fig. 1, a diagram of a network 5 including an intermittently connectable electronic device 10 (hereinafter often referred to as "electronic device 10") and a remote management system 80 in accordance with the present invention is shown. Electronic device 10 may be any electronic device that intermittently connects to another electronic device to transfer information, such as a portable computer, personal communication device, custom-designed salesperson or serviceperson device, non-mobile electronic device, cellular telephone, paging device or other. Electronic device 10 preferably includes a plurality of components, discussed in more detail below, that permit transmission of a unique identifier, status and health information, and message/file data from the electronic device to another electronic device and the receipt of same to the electronic device.

Network 5 also includes a pair of other intermittently or non-intermittently connecting electronic devices 60,61 (which represent the plurality of electronic devices, such as computers, that are often found in a network), a network administrating computer 70 and a routing structure generally represented by LAN 8. Network administrator 70 preferably includes a processor 79 and a remote management system 80, discussed in more detail below, and in one embodiment preferably monitors connection of electronic devices to the network as well as the collection of information from the devices and the transmission of data to the devices. It should be recognized that network administrator 70 represents not only a conventional network administrating computer, but also a central hub computer or a microprocessor or any other electronic device/component that may transfer information with an intermittently connectable electronic device. A central hub implementation may include a plurality of devices, for example, 10, 60 and 61, which connect directly to administrator 70. It should be further recognized that the diagram of Fig. 1 is intended to illustrate the intermittent connection of first and second electronic devices where the first device (70,60,61) acts as an inquirer and an absence agent 82 (as discussed below) responds for the second device 10 when the second device is not connected.

Electronic device 10 preferably includes conventional computing hardware and software 20 provided within a housing 11. The hardware and software may include a processor 21, fast access and disk memory, peripheral control logic and an operating system, amongst other conventional components. It should be recognized that the components of an intermittently connecting electronic device may vary widely depending, for example, on the specific purpose for which the device was designed.

Electronic device 10 also preferably includes remote access server (RAS) logic 30. RAS logic 30 is conventional logic for the remote access of an electronic device to a network (or another electronic device) via a modem and telephone line. RAS logic 30 performs standard Transmission Control Protocol/Internet Protocol (TCP/IP) for establishing communication with another device such as administrator 70. TCP/IP includes a transmission of initialization information and performance of a login sequence as is known. In response to a RAS mediated remote login of electronic device 10, administrator 70 assigns one of a plurality of "roaming" IP addresses to the electronic device.

Electronic device 10 also includes logic 40 that preferably provides storage of both a unique identifier 41 and status and health information 42. The unique identifier 41 is preferably an electronic serial number which may be stored in a plurality of ways. In one embodiment, the serial number is preferably burned into ROM mounted to a mother board of electronic device 10. The same serial number could be burned into a new motherboard in the event that motherboard replacement is required. The serial number could also be provided in a hard drive. Failure of the hard drive, however, would cause the serial number to be lost. Alternatively, the serial number could be provided in mechanical switches or the like. A concern about this approach is that human error in switch setting could lead to duplicate serial numbers and the serial number could be changed by opening the housing and flipping one of the switches.

The provision of a unique identifier 41 permits electronic device 10 to be uniquely identified without a permanently assigned IP or MAC address, and hence permits the tracking of use and status information over time. With respect to status and health information 42, this information may include device type, configurations, component specifications, software versions and information that can be used to predict potential hardware problems. Status and health information 42 is discussed in more detail below.

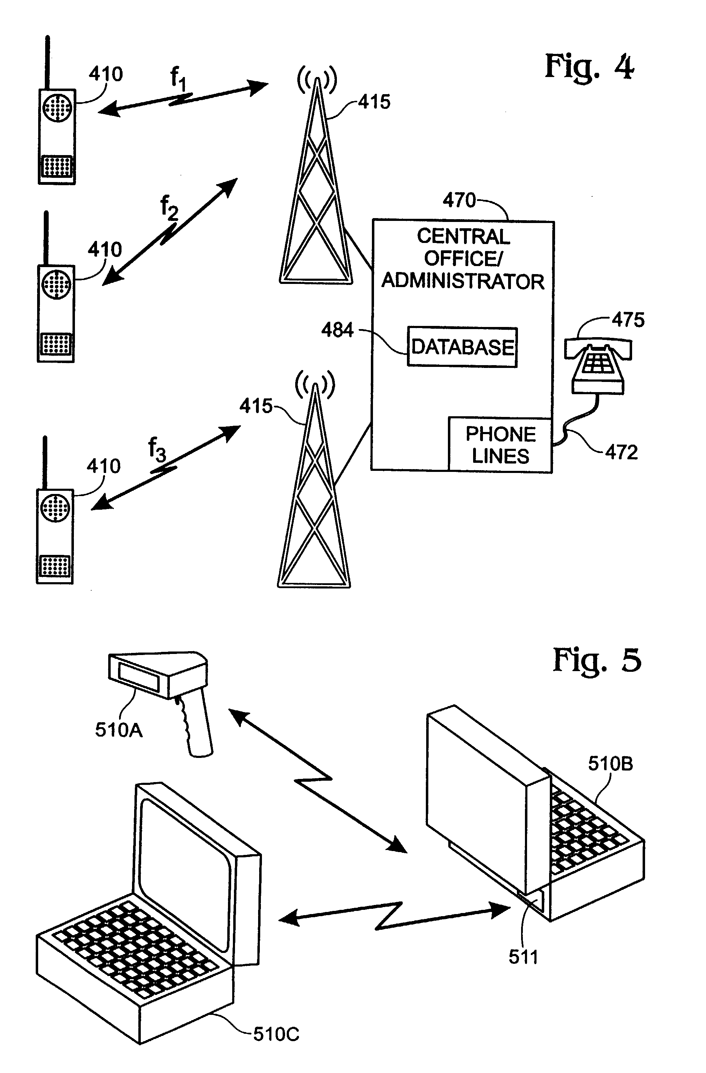

Logic is also provided within electronic device 10 for access to and transmission of unique identifier 41 and status and health information 42 to a requesting device in the network. In a preferred embodiment, this logic is desktop management interface (DMI) logic 50 (or telephone management interface logic (TMI) as discussed below with reference to Fig. 4). Conventional DMI logic performs a known protocol that allows a remote computer to query certain information from another computer connected to the network.

DMI logic 50, however, expands the functions of conventional DMI logic to provide transmission of the unique identifier and enhanced status and health information, among other data. This information may vary depending on the nature of electronic device 10. In a preferred embodiment practiced in a notebook computer, at least three groups of information can be provided.

A first group is the hardware status group. This group includes serial number, assigned IP address (if applicable), processor type and speed, drives, drivers, memory type and amount, resident software titles, and version and registration numbers for these titles, etc.

A second group is the local area network (LAN) connection group. This group includes last LAN connection date, last LAN connection length of time, last remote access server (RAS) connection date, last RAS connection length of time, etc.

A third group is the failure prediction group. This group includes battery health status, hard disk last defragmentation completion date, hard disk last defragmentation completion status, hard disk last backup date, hard disk last backup completion status, hard disk free space remaining, electronic device maximum temperature in the last 24 hours, electronic device minimum temperature in the last 24 hours, length of time above predefined maximum threshold temperature, length of time below predefined minimum threshold temperature, and other information predictive of device malfunction.

To facilitate efficient storage of and access to the information in these groups, an agent (a software program dedicated to a specific function that runs continuously in the background of system operation) may be provided in electronic device 10. Agent 45 continually collects the subject data and preferably stores it in system memory at a predefined starting address. This information may then be transferred to the administrator (or another device) by a direct memory access at the specific starting address for a block of data of predefined size. Agent 45 preferably writes the collected data to hard disk or the like at a defined frequency to minimize data loss due to a power outage or other malfunction.

With respect to administrator 70 and remote management system 80, a remote management application 81 is provided for controlling access to and transmission of data from an intermittently connecting electronic device to the administrator. A wireless or wired communication port 78 is provided for physical connection to an electronic device. This port supports RAS and DMI/TMI componentry or componentry of other complementary data transmission systems/interfaces. The remote management application 81 includes an absence agent 82 for processing information transfers for non-connected electronic devices and a database 84 defined in memory for storing relevant information.

The absence agent 82 may be configured to provide a plurality of functions. For example, in one embodiment agent 82 may continually PING addresses at which intermittently connectable devices may be connected. If a newly connected device is found, identification and health and status information are downloaded. In another embodiment, application 81 and agent 82 do not PING potential addresses but rather query intermittently connectable devices when they initiate connection. Furthermore, the intermittently connectable electronic devices can be configured to initiate transfer of the subject information when they establish connection.

The absence agent also preferably functions to effectively take the place of an electronic device when the device is not connected (both for receipt and transmission of data from the administrator and/or a user). For example, a user, through a user interface and monitor 90, is able to directly communicated with a connected device. When the device is not connected, however, agent 82 preferably provides a requester the most recently updated information from database 84 and also stores any information that is ultimately destined for the non-connected device, such as voice mail, e-mail or fax messages. These messages (or other information) are propagated to the subject device the next time that device establishes connection.

Database 84 preferably contains fields for each piece of information in the above discussed groups (in addition to fields for the results of calculations involving the above information) for each electronic device that may connect to the network. The database also preferably contains field for voice mail, e-mail and other data that is temporarily undeliverable to a device while the device is not connected and a field which indicates whether requested information is being provided from a connected device or from database 84. Fields for the unique identifier, time of last connection, and predicted failure date 86-88, respectively, for one intermittently connectable device are shown in Fig. 1.

A monitor 90, coupled to the network administrator can display an icon 91 of electronic device 10 in such a manner as to indicate whether it is connected or not. If service or some other relevant action is required, the remote management application preferably causes icon 91 to flash and to send a signal that describes the required action to the electronic device.

Referring to Fig. 2, a flow diagram 200 for the transmission of data from an intermittently connectable electronic device to another electronic device in accordance with the present invention is shown. Electronic device 10 executes a conventional login sequence to connect to network administrator 70. In one embodiment, agent 82 continually PINGs available IP addresses within the range assigned to intermittently connectable electronic devices (indicated by step 202) to determine whether an intermittently connectable electronic device has recently logged in. If a newly connected device is detected (step 204), execution of a device interrogation program commences (step 208). It should also be recognized that device interrogation (step 208 et. seq.) can be initiated by the intermittently connectable device as mentioned above.

In step 210, electronic device 10 is queried as to whether DMI (or another appropriate management interface such as TMI, discussed below) is supported. If DMI/TMI is supported, then the serial number of electronic device 10 is requested (step 212). In step 213, a determination is made as to whether the reported serial number is in a table or "hot list" of devices reported stolen or which for some other reason require a specific action to be taken. The necessary action to be taken (step 214) may include, for example, alerting security or indicating a users location, etc., and are preferably mapped to the corresponding entries in the hot list table. If the serial number is not hot listed, flow continues to step 215 where a determination is made as to whether the serial number is in database 84. Appropriate fields are preferably created (step 216) if creation of new fields for devices not previously in the database is authorized. In step 218, electronic device 10 is queried for all or some of the status and health information discussed above. Where relevant to determining whether a particular action need be taken, newly received data is compared to existing data (step 220).

In step 222, requisite actions are taken based on the content of the received data or on the comparison results. Actions may include displaying an icon representing the electronic device on monitor 90, causing that icon to flash to alert an operator, sending a message to electronic device 10 detailing the relevant actions to take or cautions to observe, displaying a message of status information on monitor 90, etc. Actions taken will vary to some extent based on the type of network or hub configuration, type of electronic device involved, the function of the system and on related considerations. In step 222, the fields of database 84 are updated with new values and in step 224, control is returned.

It should also be recognized that several options are available for the manner in which electronic device 10 is represented in icon form. For example, the size, shape, color and permanence of the icon image can be manipulated to indicate information about the status of the machine. The agent 82 can also monitor for electronic devices that have not connected for a threshold number of days. For example, agent 82 can be programmed to browse through database 84 with a certain frequency (daily, several times daily, etc.) and look for devices that have not connected. Failure to connect within a threshold time would, for example, cause an icon representative of the device to be displayed in a certain manner depicting its prolonged non-connection. In addition, the code for displaying icon 91 is preferably configured such that a double click on icon 91 causes status information for the represented electronic device to be displayed. Code for execution of this feature is known in the art.

When a electronic device is removed from a site or decommissioned, a garbage collection facility in management application 81 removes related entries from database 84.

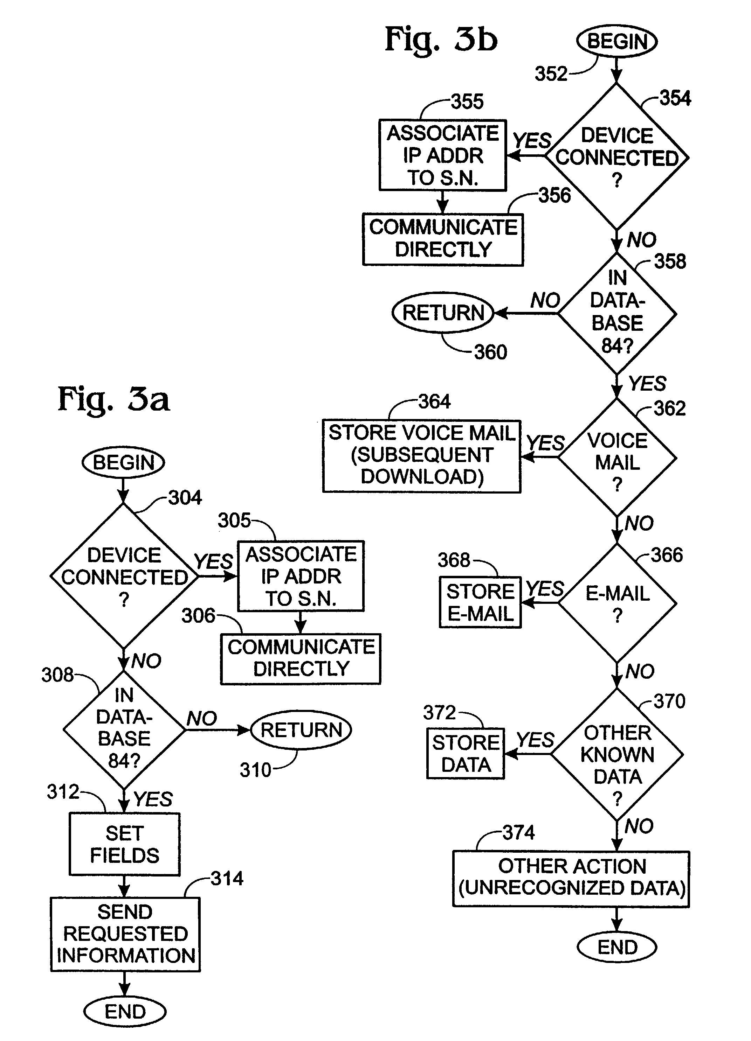

Referring to Figs. 3a-b, flow diagrams for the operation of agent 82 in responding for an absent device (where "absent" means that the intermittently connectable device is not currently connected) in accordance with the present invention is shown. Fig. 3a illustrates program flow when administrator 70 attempts to query status and health information from device 10 and Fig. 3b illustrates program flow when administrator 70 or another device attempts to send a message to device 10.

In step 302 execution of program flow for device status and health information querying is begun. In step 304, agent 82 determines whether a device from which the administrator is requesting status and health information is connected. If the device is connected then agent 82 associates the IP address (or MAC address) of the device with its unique serial number (step 305) such that in further direct communications (step 306) the inquiring device may address the serial number of the subject device rather than its temporary IP address. Once direct communication is established the inquiring device may begin interrogation as discussed above with reference to Fig. 2.

If the subject device is not connected, agent 82 determines whether there are database entries for the device (step 308). If the device is not present in database 84 (or another database created for this purpose), program flow is returned with no response (step 310).

If, however, entries for the non-connected device are present in database 84, a flag in a connected/non-connected field is set (step 312) to indicated that the requested data is being propagated from the database and not from the connected device. In step 314, the requested data is propagated from database 84 to administrator 70.

With respect to Fig. 3b, program flow begins at step 352 and in step 354, agent 82 indicates to the administrator or other device (60,61) attempting to send a message whether the subject device is connected. If the subject device is connected, agent 82 associates the IP address of connection with the unique serial number (step 355) such that the inquiring device may address the subject device by serial number rather than temporary IP address. Direct connection is then established (step 356).

In the event that the device is not connected, in step 358, a determination is made as to whether entries for the serial number of the subject device are present in database 84. If entries do not exist in the database, then flow is returned (step 360), and if entries are present in the database then flow continues to step 362.

In step 362, agent 82 determines whether the incoming message is voice mail. If it is voice mail, then the message is stored for subsequent transmission to the device when the device connects (step 364). If the message is not voice mail, then flow continues to step 366 where a determination is made as to whether the incoming message is an e-mail message. If it is an e-mail message, then the message is stored for subsequent transmission to the device.

If the message is not e-mail, then a determination is made in step 370 as to whether the message is of another recognizable form, such as a facsimile transmission or other. If it is, the message is stored for subsequent transmission (step 372). If it is not, appropriate actions, such as the setting of an error flag, are taken in step 374 and flow terminates.

Referring to Fig. 4, a diagram illustrating a cellular phone or radio frequency network/central hub system in accordance with the present invention is shown. A plurality of intermittently connectable electronic devices 410 are provided, which are preferably cellular phones, two way paging devices, salespersons or servicepersons field communication devices, or the like. Each device 410 operates at a unique frequency and signals are transmitted through transmitters 415 to an administrator 470. The connections between transmitters 415 and administrator 470 may be physically wired or wireless. Administrator 470 may also be connected over physical land lines 472 to other electronic devices such as telephones 475 or to another administrator type device (not shown).

Devices 410 preferably provide unique identification and accumulate their health and status information as discussed above with reference to device 10. Similarly, administrator 470 contains a database 484 and both the administrator and database function in manners analogous to administrator 70 and database 84, respectively, discussed above. It should be recognized the telephonic and paging system implementations of device 410 utilize telephone management interface (TMI) logic, which is known.

The embodiment of Fig. 4, permits a monitoring of health and status information and use and theft information for devices 410. Furthermore, various types of stored data (as discussed above) may be transformed to devices 410 when they connect to the administrator 470.

Referring to Fig. 5, a diagram of a peer to peer system incorporating the unique identification and data exchange of the present invention is shown. Fig. 5 illustrates a first electronic device 510A (which may be a scanner or data collector or other electronic device) that is wired or wirelessly connected to another electronic device 510B. Device 510B may be wired or wirelessly connected (through IR port 511) to an electronic device 510C. Devices 510A-510C are generally analogous to device 10 discussed above, though one or more of the devices may additionally contain the components of administrator 70. For example, if device 510A contains the components of device 10, while devices 510B-510C contain components of both device 10 and administrator 70, then device 510B can monitor health, status and other data from device 510A and devices 510B and 510C can obtain health and status information and other data from one another.

More specifically, for example, device 510A may be configured as a book scanner for use in a bookstore or library that intermittently connects to device 510B to download data. In this instance, device 510B can interrogate device 510A for battery life, time of usage, etc.

With respect to devices 510B and 510C, when configured with components of device 10 and administrator 70, a known algorithm for establishing host and remote units is invoked. For example, device 510B may be provided to a technical support person who service devices (510C) in the field. Device 510B initiates communication and establishes itself as the host, after which it elicits information from device 510C and initiates repair.

While the invention has been described in connection with specific embodiments thereof, it will be understood that it is capable of further modification, and this application is intended to cover any variations, uses, or adaptations of the invention following, in general, the principles of the invention and including such departures from the present disclosure as come within known or customary practice in the art to which the invention pertains and as may be applied to the essential features hereinbefore set forth, and as fall within the scope of the invention and the limits of the appended claims.

## Claims

1. An intermittently connectable electronic apparatus (10,410,510), comprising:
a housing (11);
a processor (21) mounted to said housing (11);
connecting means (30) coupled to said processor (21) for connecting said intermittently connectable electronic apparatus to another electronic device;
permanent unique identifier means (41) coupled to said processor (20) for storing a unique identifier of said intermittently connectable electronic apparatus (10,410,510); and
logic means (20,50) for presenting said unique identifier (41) to another electronic device coupled to said connecting means (30) in such a manner that another electronic device coupled to said connecting means can read said unique identifier (41).

2. The apparatus of claim 1, further comprising:
means (20,40) for detecting and storing status and health information for said intermittently connectable electronic apparatus (10,410,510); and wherein
said logic means (20,50) includes means for presenting said status and health information (42) to another electronic device coupled to said connecting means (30) in such a manner that another electronic device connected at said connecting means (30) can read said status and health information (42).

3. The apparatus of claim 2, wherein said logic means (20,50) further comprises agent logic (42) for controlling the detecting and storing of said status and health information (42).

4. An administrating apparatus (70,470,510B) for an intermittently connectable electronic device (10,410,510), comprising:
a housing;
a processor (79) coupled to said housing;
means (78) for connecting to an intermittently connectable electronic device;
detection logic (81) for detecting the establishment of communication between an intermittently connectable electronic device and said administrating apparatus (70,470,510B) through said connecting means (78); and
permanent unique identifier reading logic (81) for reading a permanent unique identifier of an intermittently connectable electronic device that has established communication with said administrating apparatus (70,470,510B) through said connecting means (78).

5. The apparatus of claim 4, further comprising:
means (81) for reading status and health information from an intermittently connectable electronic device that has established communication with said administrating apparatus (70,470,510B) through said connecting means (78).

6. The apparatus of claim 5, further comprising:
database means (84) including fields (86-88) for a unique identifier and status and health information for each of a plurality of intermittently connectable electronic devices capable of intermittent connections to said administrating apparatus (70,470,510B).

7. The apparatus of claim 5, further comprising means (81,214) for determining whether a predefined action should be taken based on the content of the read status and health information.

8. The apparatus of claim 6, further comprising absence agent logic (82) for responding to a request for information from an intermittently connectable electronic device by providing related information from said database (84) when that intermittently connectable electronic device is not presently connected.

9. The apparatus of claim 6, further comprising absence agent logic (82) for storing messages for a non-connected intermittently connectable electronic device for subsequent transmission to that device when that device subsequently connects to said administrating apparatus (70,470,510B).

10. The apparatus of claim 4, wherein said connecting means (78) includes an addressable port of the type including at least IP and MAC addressable ports; and wherein said permanent unique identifier reading logic (81) comprises means (305,355) for associating a unique identifier of an intermittently connectable electronic device connected at said connecting means with the address of said addressable port.
